# EUROPEAN PATENT SPECIFICATION

(11) **EP 4 058 412 B1**
(45) Date of publication and mention of the grant of the patent: **03.04.2024**
(21) Application number: 20811760.6
(22) Date of filing: 03.11.2020
(51) Int. Cl.: C02F 1/52, B01D 21/00, B01D 21/01, B01D 21/02, B01D 21/24, B01D 21/08, C02F 1/40

(54) **APPARATUS FOR PURIFYING WATER AND CORRESPONDING PURIFICATION METHOD**
VORRICHTUNG ZUR REINIGUNG VON WASSER UND ENTSPRECHENDES REINIGUNGSVERFAHREN
APPAREIL D'ÉPURATION D'EAU ET PROCÉDÉ D'ÉPURATION CORRESPONDANT

(30) Priority: 14.11.2019 IT 201900021201
(43) Date of publication of application: 21.09.2022
(73) Proprietor: I.M.M.M.E.S. S.r.l., 30010 Campagna Lupia (IT)
(72) Inventor: COMBERLATO, Giuseppe, 30010 CAMPONOGARA (IT); VETTORATO, Giulio, 30010 CAMPONOGARA (IT)
(74) Representative: Petraz, Davide Luigi
(86) International application number: PCT/IT2020/050265
(87) International publication number: WO 2021/095069

(56) References cited:
- IT-A1- UD20 010 050
- US-A- 2 243 826
- US-A- 2 665 975

## Description

### FIELD OF THE INVENTION

The present invention concerns an apparatus for purifying water. In particular, the purification apparatus is of the type able to purify and clarify any type of water, or other similar or comparable liquid substance, by agglomerating or coagulating the pollutants present in the water.

The present invention also concerns a method for purifying water.

### BACKGROUND OF THE INVENTION

It is known that, at the end of industrial processing, the waste water used for cooling, rinsing, cleaning products, etc., is altered by pollutants that make them unusable and harmful to the environment. The waste water must necessarily be purified in order to be then put back into circulation in the production cycle from which it comes, or discharged into natural drainage basins.

Water purification can be carried out with various types of treatments, including, for example, the coagulation process.

Coagulation is a chemical-physical process that leads to the destabilization of colloidal substances, that is, the polluting solid substances, suspended in the liquid substance to be treated, which interact with each other, agglomerate and then precipitate. This process requires the addition of appropriate reagents, called coagulants, to the water to be purified.

This treatment, used on an industrial level, provides to introduce water into open-air sedimentation tanks of considerable size, in which the progressive aggregation, separation and deposit of sediments and suspended solids takes place.

From the point of view of plant design, the process begins in a coagulation tank, and then the effluent passes through at least one further treatment tank and subsequently into a sedimentation tank.

However, these known purification plants are complex and bulky, and have numerous components and, therefore, entail high management and maintenance costs as well as a low quantity of purifiable water per unit of time.

Combined plants also exist, where the coagulation and sedimentation operations are carried out inside a single piece of equipment, in correspondence with suitable compartments.

An apparatus for purifying water of this type is described in the Italian patent no. 102001900915584 in the name of the present Applicant.

However, over the years the need has arisen to obtain apparatuses for purifying water with ever higher purification yields in order to obtain constant and always efficient water recovery.

In addition, known purification devices and plants are generally complex to clean and require high maintenance costs with the risk of high purification downtimes.

Furthermore, known water purification apparatuses and plants do not allow to remove both solid or semi-solid substances with a high specific weight with respect to water, and also liquid or semi-liquid substances with a low specific weight with respect to water, such as for example oils and/or grease dissolved in the water to be purified. Typically, a de-oiling treatment is required to remove oils and/or grease, which entails using additional specific apparatuses, requiring higher management, purification and maintenance costs.

There is therefore a need to perfect an apparatus for purifying water and a corresponding purification method that can overcome at least one of the disadvantages of the state of the art.

In particular, one purpose of the present invention is to optimize the purification yield increasing the maximum quantity of water to be treated in the unit of time.

Another purpose of the present invention is to provide an apparatus for purifying water that reduces the need to perform maintenance and cleaning operations to a minimum.

Another purpose of the present invention is to provide an apparatus for purifying water that facilitates the removal of oils and grease from the water to be treated.

Another purpose of the present invention is to perfect a method for purifying water which is efficient, and which allows to obtain a high purification yield.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, the present invention concerns an apparatus for purifying water to be purified, which comprises a tank for the water to be purified, which develops around a main axis of development.

This tank comprises a bottom, conformed as a hopper, to receive the sediment separated from the water to be purified, and an inlet connected to the bottom itself.

Furthermore, the purifying apparatus comprises at least one pump mean, outside the tank, and connected to the inlet.

This at least one pump mean is configured to feed under pressure a flow of water to be purified in the tank.

The purifying apparatus also comprises at least one conduit disposed axially inside the tank and diverging upward with respect to the main axis of development.

This conduit is fluidically connected to the inlet and is configured to receive pressurized water fed by the at least one pump mean.

Finally, the purifying apparatus comprises a hydraulic accelerator/mixer assembly disposed in the tank and which connects the inlet to the conduit.

This hydraulic accelerator/mixer assembly is configured to increase the speed of the flow of water to be purified introduced into the tank. Therefore, there comes to be determined a recirculation flow at entry to the hydraulic accelerator/mixer assembly, obtaining a mixture of the flow of water to be purified with at least part of the sediment present in correspondence with the bottom of the tank and/or at least part of substances to be removed being deposited on the bottom itself.

According to the present invention, the hydraulic accelerator/mixer assembly is of the multi-stage type and comprises at least two accelerator/mixer devices disposed connected in sequence along the main axis of development.

The at least two accelerator/mixer devices as above comprise a first accelerator/mixer device disposed connected directly downstream of the inlet, and a second accelerator/mixer device disposed downstream of the first accelerator/mixer device. The first accelerator/mixer device as above is able to increase the speed of the flow of water to be purified introduced into the tank, and the second accelerator/mixer device as above is able to increase the speed of the flow of water to be purified received from the first accelerator/mixer device. The at least two accelerator/mixer devices as above are also configured to determine respective recirculation sub-flows of the recirculation flow at entry to the first accelerator/mixer device and the second accelerator/mixer device respectively.

Each accelerator/mixer comprises a respective recirculation chamber and a nozzle, of the Venturi type, disposed inside said recirculation chamber and configured to generate said respective recirculation sub-flow (R1, R2) from a recirculation zone to the recirculation chamber, and wherein the recirculation chamber and the respective nozzle of said first accelerator/mixer device have smaller sizes than respectively the recirculation chamber and the respective nozzle of said second accelerator/mixer device.

Furthermore, the present invention also concerns a method to purify water to be purified. This method comprises:
- introducing under pressure a flow of water to be purified into a tank that develops around a main axis of development, in order to determine the formation of sediment separated from the water that deposits on a bottom conformed as a hopper, wherein the water to be purified is introduced from an inlet connected to the bottom and conveyed through an obligatory path formed by at least one conduit disposed axially inside the tank and diverging upward with respect to the main axis of development,
- increasing the speed of the flow of water to be purified introduced into the tank by means of a hydraulic accelerator/mixer assembly connected at entry to the conduit, and recirculating water to be purified at entry to the hydraulic accelerator/mixer assembly obtaining a mixture of the flow of water to be purified with at least part of the sediment present in correspondence with the bottom and/or at least part of substances to be removed which deposit on the bottom.

Said increase in speed of the flow of water to be purified and said recirculation of water to be purified are carried out by means of sequential multi-stage operations of speed increase and recirculation by means of at least two accelerator/mixer devices disposed connected in sequence along said main axis of development (X), wherein a first operation of said sequential multi-stage operations increases the speed of the flow of water to be purified introduced into the tank by means of a first accelerator/mixer device, and a second operation of said sequential multi-stage operations increases, by means of a second accelerator/mixer device, the speed of the flow of water to be purified received from said first accelerator/mixer device, wherein in said first operation and second operation, there also being determined, by means of said at least two accelerator/ mixer devices, the formation of respective recirculation sub-flows (R1, R2) of said recirculation flow (R) at entry respectively to said first accelerator/mixer device and said second accelerator/mixer device, wherein each accelerator/mixer device comprises a respective recirculation chamber and a nozzle, of the Venturi type, disposed inside said recirculation chamber and configured to generate said respective recirculation sub-flow (R1, R2) from the recirculation zone to the recirculation chamber wherein the recirculation chamber and the respective nozzle of said first accelerator/mixer device have smaller sizes than respectively the recirculation chamber and the respective nozzle of said second accelerator/mixer device.

The method as above provides that the increase in speed of the flow of water to be purified and the recirculation of water to be purified are carried out by means of sequential multi-stage operations of speed increase and recirculation, by means of at least two accelerator/mixer devices disposed connected in sequence along the main axis of development.

In accordance with the present invention, the method provides that a first operation of the sequential multi-stage operations increases the speed of the flow of water to be purified introduced into the tank by means of a first accelerator/mixer device, and a second operation of the sequential multi-stage operations increases, by means of a second accelerator/mixer device, the speed of the flow of water to be purified received from the first accelerator/mixer device. The first operation and second operation as above also determine, by means of the at least two accelerator/mixer devices, the formation of respective recirculation sub-flows of the recirculation flow at entry to the first accelerator/mixer device and the second accelerator/mixer device respectively.

Advantageously, the accelerator/mixer devices of the hydraulic accelerator/mixer assembly of the embodiments described here exploit the Venturi effect to accelerate the flow of water, and at the same time generate a recirculation effect to enrich the water to be purified with part of the sediment deposited and part of the polluting substances being deposited, so as to be able to increase the kinetic energy that can be exploited during the acceleration of the recirculation flow of water and, therefore, the resulting purifying effect.

Furthermore, the use of at least two consecutive accelerator/mixer devices disposed in series allows to obtain a rapid mixing that creates a swirling motion, which allows a good dispersion of the suspended particles, and to perfect the mixture ratio between the flow to be purified and the coagulating additives, thus optimizing the efficiency of the purifying apparatus.

### DESCRIPTION OF THE DRAWINGS

These and other aspects, characteristics and advantages of the present invention will become apparent from the following description of a preferential embodiment, given as a non-restrictive example with reference to the attached drawing wherein:

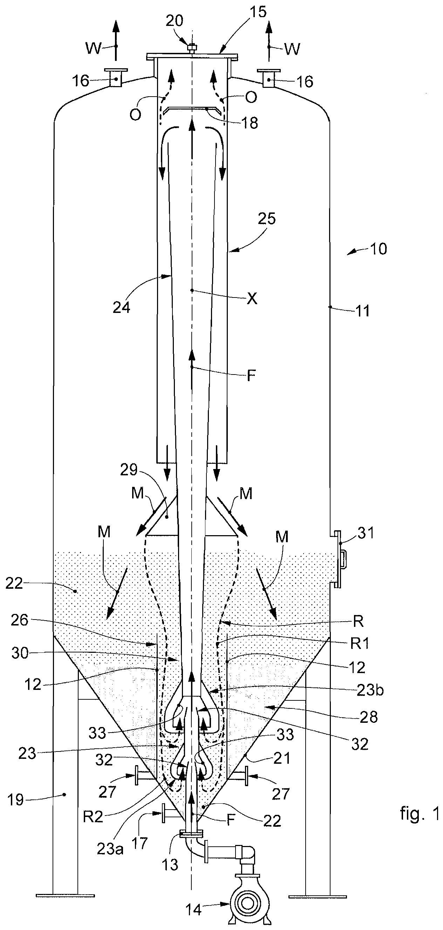

- fig. 1 is a schematic, longitudinal section view of the apparatus for purifying water according to one embodiment described here.

### DESCRIPTION OF EMBODIMENTS

We will now refer in detail to the possible embodiments of the invention, of which one example is shown in the attached drawing. This example is supplied by way of illustration of the invention and shall not be understood as a limitation thereof. For example, one or more characteristics shown or described insomuch as they are part of one embodiment can be varied or adopted on, or in association with, other embodiments to produce further embodiments. It is understood that the present invention shall include all such modifications and variants, with the scope of the invention being defined in the appended claims.

We must also clarify that the phraseology and terminology used here is for the purposes of description only, and cannot be considered as limitative.

Fig. 1 is used to describe, by way of example, some embodiments of an apparatus 10 for purifying water to be purified F. The water to be purified can for example come from any industrial or non-industrial plant whatsoever.

By water to be purified F, here and hereafter in the description we mean water as such, or other process liquid to be purified, for example comprising substances to be removed, such as polluting substances M and/or oily substances O. Furthermore, we do not exclude that the water to be purified, or similar liquid, can also come from other sources, including non-industrial ones, such as water or liquids of domestic origin, urban sewage or suchlike.

By polluting substances M, here and hereafter in the description we mean, as a non-limiting example, process waste, sludge, suspended or sedimented particles that cause water turbidity.

By oily substances O we mean, here and hereafter in the description, all those substances, as a non-limiting example, oils and grease, which, since they have a specific weight lower than that of water, tend to float.

With reference to fig. 1 attached, the apparatus comprises a tank 11 for the water to be purified, which has a vertical development along a main axis of development X and is substantially closed.

The tank 11 can consist of a cylindrical body, although other shapes are not excluded, and it can be made of steel, for example electro-welded steel.

At the lower part, the tank 11 comprises a bottom 21, conformed as a hopper, the vertex of which faces downward, in order to receive sediment 22 separated from the water to be purified F during the functioning of the purifying apparatus 10.

By sediment 22, here and hereafter in the description we mean the set of solid and semi-solid particles which, since they have a specific weight greater than that of water, deposits by gravity on the bottom 21.

In particular, in fig. 1 the sediment 22 is represented, by way of a non-limiting example and solely for the purposes of easy and immediate understanding, with different shadings in order to highlight the natural stratification of the sedimented material, from the heaviest and most compact near the bottom 21 to the lightest and incoherent deposited above the latter.

With the tank 11 there can be associated support elements, or legs 19, which allow it to rest steadily on the ground.

In particular, the tank 11 comprises an inlet 13 connected to the bottom 21, for example in correspondence with the lower vertex of the bottom 21 itself. This inlet 13 is provided for the selective introduction of water to be purified F into the tank 11.

This inlet 13 can be axial with respect to the main axis of development X.

With reference to fig. 1, the purifying apparatus 10 comprises at least one pump mean 14 outside the tank 11 and connected to the inlet 13 as above.

The pump mean 14 is configured to feed under pressure a flow of water to be purified F or other liquid to be purified in the tank 11.

With reference to the embodiment of fig. 1, the purifying apparatus 10 comprises a conduit 24 disposed axially inside the tank 11 and diverging upward with respect to the main axis of development X. An advantageous technical effect of this divergent conformation is that the flow of water to be purified F gradually loses speed as it rises upward along the main axis of development X.

In particular, the conduit 24 is fluidically connected to the inlet 13 in order to receive pressurized water fed by the pump mean 14.

The purifying apparatus 10 also comprises a hydraulic accelerator/mixer assembly 23 disposed in the tank 11 which connects the inlet 13 to the conduit 24.

In particular, the hydraulic accelerator/mixer assembly 23 is configured to increase the speed of the flow of water to be purified F introduced into the tank 11 and to determine a recirculation flow R at entry to the hydraulic accelerator/mixer assembly 23, obtaining a mixing of the flow of water to be purified F with at least part of the sediment 22 present in correspondence with the bottom 21 and/or at least part of the substances to be removed, for example polluting substances M being deposited on the bottom 21.

According to one aspect of the present invention, the hydraulic accelerator/mixer assembly 23 is of the multi-stage type and comprises at least two accelerator/mixer devices 23a, 23b disposed connected in sequence along the main axis of development X.

The at least two accelerator/mixer devices 23a, 23b comprise a first accelerator/mixer device 23a disposed connected directly downstream of the inlet 13, and a second accelerator/mixer device 23b disposed downstream of the first accelerator/mixer device 23a along the main axis of development X.

The first accelerator/mixer device 23a is able to increase the speed of the flow of water to be purified F introduced into the tank 11, and the second accelerator/mixer device 23b is able to increase the speed of the flow of water to be purified F received from the first accelerator/mixer device 23a.

In particular, the two accelerator/mixer devices 23a, 23b are also configured to determine respective recirculation sub-flows R1, R2 of the recirculation flow R at entry to the first accelerator/mixer device 23a and the second accelerator/mixer device 23b respectively.

This solution allows to optimize the speed and, therefore, the flow rate of the flow of water to be purified F to be channeled into the divergent conduit 24, improving the agglomeration capacity of the polluting substances M present in the water to be purified F and, therefore, improving the purifying efficiency.

According to one possible embodiment, the purifying apparatus 10 can provide means (not shown) for introducing additives, for example coagulants, which promote the aggregation and sedimentation of the particles suspended in the water to be purified F in order to optimize the yield of the purifying apparatus 10.

Each accelerator/mixer device 23a, 23b comprises a recirculation chamber 33 and a nozzle 32, for example of the Venturi type, disposed inside the recirculation chamber 33.

According to one embodiment, the nozzle 32 converges upward with respect to the main axis of development X of the tank 11, that is, toward the conduit 24 above.

According to one embodiment, the recirculation chamber 33 of the accelerator/mixer device 23a, 23b has a shape and a size able to cooperate with the nozzle 32 in order to increase the speed of the flow of water to be purified F.

In particular, the recirculation chamber 33 is at least partly converging toward the conduit 24 in a manner mating with the convergent development of the nozzle 32.

According to one embodiment, the nozzle 32 is configured to generate a depression effect inside the recirculation chamber 33 following the acceleration imparted to the flow of water to be purified F, generating the recirculation flow R as above.

In particular, the nozzle 32 is configured to generate the respective recirculation sub-flow R1, R2 from the recirculation zone 30 to the recirculation chamber 33.

Advantageously, the recirculation chamber 33 has one or more apertures on the bottom to facilitate the recovery of the sediment 22 by means of the recirculation flow R generated due to the depression effect created inside the recirculation chamber 33 by the nozzle 32.

This embodiment makes it possible to facilitate the re-mixing of the polluting substances M being deposited on the bottom 21 and of part of the sediment 22 deposited on the bottom 21 with the water to be purified F.

Due to the double acceleration imparted to the flow of water to be purified F by the two nozzles 32 of the two accelerator/mixer devices 23a, 23b located in sequence, the two recirculation sub-flows R1, R2 are created through the respective recirculation chambers 33 of the two accelerator/mixer devices 23a, 23b.

This double recirculation effect allows to increase the flow rate of the water to be purified F and, therefore, its speed, optimizing the purification thereof.

The recirculation chamber 33 and the respective nozzle 32 of the first accelerator/mixer device 23a have smaller sizes than the recirculation chamber 33 and the respective nozzle 32 of the second accelerator/mixer device 23b, respectively. In this way, the following are respectively generated:
- the first recirculation sub-flow R1, substantially generated by the first accelerator/mixer device 23a, having a greater suction effect in order to recirculate part of the agglomerated polluting substances M that are precipitating onto the bottom 21 and the heavier sediment 22 deposited on the bottom 21 of the tank 11;
- the second recirculation sub-flow R2, substantially generated by the second accelerator/mixer device 23b, for the recovery of the agglomerated polluting substances M that are precipitating onto the bottom 21 and/or of the lighter sediment 22 deposited on the bottom 21.

According to one embodiment, the purifying apparatus 10 comprises separator means 26, which delimit, around the hydraulic accelerator/mixer assembly 23, a zone 30 for the recirculation of part of the sediment 22 and part of the polluting substances M, which fall from above. Such separator means 26 can be one or more separator divisions, partitions, walls or shells suitably located with respect to the hydraulic accelerator/mixer assembly and the conduit 24.

Advantageously, the separator means 26 are configured to define preferential channels for the passage of the recirculation flow R toward the recirculation zone 30 as above, and, therefore, toward the hydraulic accelerator/mixer assembly 23, so as to recirculate the polluting substances M, falling toward the bottom 21, suitable to be introduced once again into the flow of water to be purified F, and/or the sediment 22 present in the recirculation zone 30 to be reused.

In particular, the separator means 26 separate the recirculation zone 30 and, therefore, the hydraulic accelerator/mixer assembly 23 from a zone 28 for the collection of the sediment 22, deposited on the bottom 21, which has to be removed.

According to one embodiment, the zone 28 for the collection of the deposited sediment 22 is comprised between the walls of the tank 11 and the separator means 26.

For example, the separator means 26 can be defined by one or more internal walls 12 disposed inside the tank 11 and which extend from the bottom 21 toward the inside of the tank 11. In particular, the internal walls 12 can be substantially parallel to the main axis of development X of the tank 11.

According to one embodiment, shown by way of example in fig. 1, the separator means 26 can be defined by at least two opposite internal walls 12 containing between them the hydraulic accelerator/mixer assembly 23.

According to another embodiment, the separator means 26 can be defined by internal walls 12 disposed so as to enclose inside them the hydraulic accelerator/mixer assembly 23.

According to another embodiment, the separator means 26 can comprise a single internal wall 12 concentric to the main axis of development X and containing the hydraulic accelerator/mixer assembly 23.

According to one embodiment, the purifying apparatus 10 further comprises a flow diverter 29 disposed in the tank 11 and provided on the external walls of the conduit 24 downstream of the hydraulic accelerator/mixer assembly 23 along the main axis of development X.

In particular, the flow diverter 29 is provided downstream of the separator means 26 along the main axis of development X.

According to one embodiment, the flow diverter 29 is configured to suitably direct the substances to be removed, in particular the polluting substances M, falling by gravity from the divergent end of the conduit 24 toward the bottom 21 in the collection zone 28. The flow diverter 29 allows to not accumulate excessive sediment 22 in the recirculation zone 30, which could cause malfunctions of the purifying apparatus 10, thus reducing maintenance and cleaning interventions to a minimum.

According to one embodiment, the flow diverter 29 has a shape mating with the shape and disposition of the separator means 26.

The flow diverter 29 can also comprise a truncated cone element that wraps around the conduit 24.

The flow diverter 29 can comprise one or more ramps, fins or other sloping element disposed radially with respect to the conduit 24.

For example, the flow diverter 29 can comprise a sloping element for each internal wall 12 in order to divert the flow of falling polluting substances M toward said internal wall 12 in the collection zone 28.

According to one embodiment, the purifying apparatus 10 comprises at least one discharge outlet 17 configured to easily and quickly remove the sediment 22, collected in the recirculation zone 30, which is no longer suitable to be recirculated by the hydraulic accelerator/mixer assembly 23. In fact, this sediment could, in the long run, compromise the correct functioning of the hydraulic accelerator/mixer 23 assembly.

In particular, the at least one discharge outlet 17 can be disposed on the bottom 21 in the proximity of the inlet 13.

According to one embodiment, the purifying apparatus 10 comprises at least one evacuation outlet 27 which allows the continuous or periodic discharge of part of the coagulated sediment 22, separated from the water to be purified F and accumulated in the collection zone 28.

In particular, such at least one evacuation outlet 27 is provided on the wall of the bottom 21 of the tank 11 in connection with the collection zone 28.

The purifying apparatus 10 can comprise one or more evacuation outlets 27 in order to constantly guarantee the correct and rapid evacuation of the sediment 22 to be removed from the collection zone 28.

The evacuation outlet 27 and/or the discharge outlet 17 can be associated with a timed valve.

According to one embodiment, the purifying apparatus 10 comprises a deflector 18 disposed inside the tank 11 and above the divergent terminal end of the conduit 24, along the main axis of development X.

According to one embodiment, the deflector 18 is configured to divert the polluting substances M present in the water to be purified F coming from the conduit 24 toward the bottom 21.

In particular, the deflector 18 can have ends curved downward, that is, toward the bottom 21, in order to direct the flow of water to be purified F at exit from the conduit 24.

According to one embodiment, the purifying apparatus 10 comprises an annular conduit 25 concentric and external to the conduit 24, and which extends from the top of the tank 11 toward the inside of the latter, along the main axis of development X, so as to define an obligatory path for the water to be purified F from the inlet 13 to the conduit 24, from the conduit 24 to the annular conduit 25 and from the annular conduit 25 toward the bottom 21.

According to one embodiment, the deflector 18 is provided internally and axially to the annular conduit 25.

Advantageously, therefore, the flow of water to be purified F is directed upward in the divergent conduit 24, progressively losing speed until the impact with the deflector 18, and is subsequently diverted into the annular conduit 25, in particular between the annular conduit 25 and the conduit 24, toward the bottom 21 with a progressively increasing section.

The sudden decrease in the speed of the water after the impact with the deflector 18 allows the aggregate solid polluting substances present in the water, of large size and heavy weight, to separate from the water and to continue by inertia their downward travel inside the annular conduit 25, progressively depositing on the bottom 21.

According to one embodiment, the deflector 18 is positioned centrally inside the annular conduit 25 so as to define a passage gap between the deflector 18 itself and the internal walls of the annular conduit 25, so that any oily substances pass through this passage gap according to the path indicated with "O" in fig. 1.

According to another embodiment, the purifying apparatus 10 comprises at least one upper outlet 20 associated with the top of the tank 11 and configured for the removal of the oily substances O dissolved in the water to be purified F at exit from the conduit 24.

In particular, the upper outlet 20 is provided in correspondence with the annular conduit 25 in order to remove substances, in particular oily substances O, accumulated in the latter through the passage gap as above. The top of the tank 11 and the top of the annular conduit 25 are closed by a lid 15 attached, for example by means of a flanged coupling, by way of suitable attachment means (for example, bolts), to the upper end of the tank 11 itself. In this way, it is possible to allow easy access to the inside of the tank 11, in case a maintenance operation is required.

For example, the at least one upper outlet 20 can be disposed on the lid 15.

Following the impact with the deflector 18, the treated water, indicated with reference W in fig. 1, tends to rise toward the top of the tank 11 and the polluting substances M tend to deposit on the bottom 21.

In particular, the treated water W, exiting from the lower end of the annular conduit 25, is thus purified and progressively fills the upper part of the tank 11, until it is filled.

According to one embodiment, the purifying apparatus 10 comprises at least one outlet 16 of the treated water W, disposed on the top of the tank 11.

For example, the outlet 16 can be provided laterally with respect to the annular conduit 25.

In particular, the at least one outlet 16 is configured to evacuate the treated water W in a direction substantially parallel to the main axis of development X of the tank 11, improving and optimizing the evacuation of the treated and purified water.

The apparatus 10 for purifying water allows to create a continuous flow of water to be purified F which enters dirty through the hydraulic accelerator/mixer assembly 23 and exits clean, as treated water W, from the at least one outlet 16, with the coagulated sediment 22 depositing on the bottom 21.

Furthermore, the purifying apparatus 10 can have at least one aperture 31, or manhole, which can be selectively opened in order to allow access to the tank 11 and allow an easy internal inspection and a possible accurate cleaning/maintenance operation of the internal part of the tank 11 itself.

The at least one aperture 31 can comprise a mouth of a suitable size.

In particular, the at least one aperture 31 can be provided on the cylindrical enclosure of the tank 11 and in the proximity of the upper conical part of the bottom 21.

The tank 11 is equipped with suitable regulation and control valve systems, not relevant in the context of the present invention and not shown in fig. 1.

It is clear that modifications and/or additions of parts and/or steps may be made to the apparatus for purifying water 10 and to the corresponding method as described heretofore, without departing from the field and scope of the present invention, as defined in the appended claims.

It is also clear that, although the present invention has been described with reference to some specific examples, a person of skill in the art shall certainly be able to achieve many other equivalent forms of apparatus for purifying water and corresponding method, having the characteristics as set forth in the claims and hence all coming within the field of protection defined thereby.

In the following claims, the sole purpose of the references in brackets is to facilitate reading: they must not be considered as restrictive factors with regard to the field of protection claimed in the specific claims.

## Claims

1. Apparatus for purifying water to be purified (F), said apparatus comprising:
- a tank (11) for the water to be purified, which develops around a main axis of development (X) and which comprises a bottom (21), conformed as a hopper, to receive sediment (22) separated from the water to be purified (F), and an inlet (13) connected to said bottom (21);
- at least one pump mean (14), outside said tank (11), and connected to said inlet (13), the pump mean (14) being able to feed under pressure a flow of water to be purified (F) in said tank (11);
- at least one conduit (24) disposed axially inside said tank (11) and diverging upward with respect to said main axis of development (X), said conduit (24) being fluidically connected to said inlet (13) to receive pressurized water fed by said at least one pump mean (14);
- a hydraulic accelerator/mixer assembly (23) disposed in said tank (11) and which connects said inlet (13) to said conduit (24), wherein said hydraulic accelerator/mixer assembly (23) is configured to increase the speed of the flow of water to be purified (F) introduced into the tank (11) and determine a recirculation flow (R) at entry to said hydraulic accelerator/mixer assembly (23) obtaining a mixture of the flow of water to be purified (F) with at least part of the sediment (22) present in correspondence with said bottom (21) and/or at least part of substances to be removed being deposited on the bottom (21);
**characterized in that** said hydraulic accelerator/mixer assembly (23) is of the multi-stage type and comprises at least two accelerator/mixer devices (23a, 23b) disposed connected in sequence along said main axis of development (X) which comprise a first accelerator/mixer device (23a) disposed connected directly downstream of said inlet (13) and able to increase the speed of the flow of water to be purified (F) introduced into the tank (11) and a second accelerator/mixer device (23b) disposed downstream of said first accelerator/mixer device (23a) and able to increase the speed of the flow of water to be purified (F) received from said first accelerator/mixer device (23a), wherein said at least two accelerator/mixer devices (23a, 23b) are also configured to determine respective recirculation sub-flows (R1, R2) of said recirculation flow (R) at entry respectively to said first accelerator/mixer device (23a) and said second accelerator/mixer device (23b) and each comprises a respective recirculation chamber (33) and a nozzle (32), of the Venturi type, disposed inside said recirculation chamber (33) and configured to generate said respective recirculation sub-flow (R1, R2) from a recirculation zone (30) to the recirculation chamber (33), and
wherein the recirculation chamber (33) and the respective nozzle (32) of said first accelerator/mixer device (23a) have smaller sizes than respectively the recirculation chamber (33) and the respective nozzle (32) of said second accelerator/mixer device (23b).

2. Apparatus as in claim 1, **characterized in that** it comprises separator means (26) which delimit said recirculation zone (30) around said hydraulic accelerator/mixer assembly (23), said separator means (26) being configured to define preferential channels for the passage of the recirculation flow (R) toward said hydraulic accelerator/mixer assembly (23).

3. Apparatus as in claim 2, **characterized in that** it comprises a flow diverter (29) provided on the external walls of the conduit (24), downstream of said hydraulic accelerator/mixer assembly (23), along said main axis of development (X), wherein said flow diverter (29) is configured to direct a flow of polluting substances (M) present in the water to be purified (F) falling by gravity from the divergent terminal end of the conduit (24) toward the bottom (21) outside the recirculation zone (30).

4. Apparatus as in any claim hereinbefore, **characterized in that** it comprises a deflector (18) disposed inside the tank (11) and above the divergent terminal end of the conduit (24) along the main axis of development (X), said deflector (18) being configured to divert toward the bottom (21) a flow of polluting substances (M) present in the water to be purified (F) coming from said conduit (24).

5. Apparatus as in any claim hereinbefore, **characterized in that** it comprises an upper outlet (20) associated with the top of the tank (11) and configured for the removal of oily substances (O) dissolved in the water to be purified (F) at exit from said conduit (24).

6. Apparatus as in claims 4 and 5, **characterized in that** it comprises an annular conduit (25) concentric and external to said conduit (24) and which extends from the top of the tank (11) toward the inside of the latter, along said main axis of development (X), so as to define an obligatory path for the water to be purified (F), said deflector (18) being positioned centrally inside said annular conduit (25) so as to define a passage gap between the deflector (18) itself and the walls of the annular conduit (25), said passage gap being configured for the passage of oily substances (O) toward said at least one upper outlet (20) wherein said upper outlet (20) is associated with the top of the tank (11) and is provided in correspondence with said annular conduit (25).

7. Apparatus as in any claim hereinbefore, **characterized in that** it comprises at least one outlet (16) disposed on the top of the tank (11) and configured to evacuate the treated water (W) in a direction substantially parallel to said main axis of development (X) of the tank (11).

8. Method to purify water to be purified (F), said method comprising:
- introducing under pressure a flow of water to be purified (F) into a tank (11) that develops around a main axis of development (X), to determine the formation of sediment (22) separated from the water that deposits on a bottom (21) conformed as a hopper, wherein said water to be purified is introduced from an inlet (13) connected to the bottom (21) and conveyed through an obligatory path formed by at least one conduit (24) disposed axially inside said tank (11) and diverging upward with respect to said main axis of development (X),
- increasing the speed of the flow of water to be purified (F) introduced into the tank (11) by means of a hydraulic accelerator/mixer assembly (23) connected at entry to said conduit (24) and recirculating water to be purified (F) at entry to said hydraulic accelerator/mixer assembly (23) obtaining a mixture of the flow of water to be purified (F) with at least part of the sediment (22) present in correspondence with said bottom (21) and/or at least part of substances to be removed which deposit on the bottom (21),
**characterized in that** said increase in speed of the flow of water to be purified (F) and said recirculation of water to be purified (F) are carried out by means of sequential multi-stage operations of speed increase and recirculation by means of at least two accelerator/mixer devices (23a, 23b) disposed connected in sequence along said main axis of development (X), wherein a first operation of said sequential multi-stage operations increases the speed of the flow of water to be purified (F) introduced into the tank (11) by means of a first accelerator/mixer device (23a), and a second operation of said sequential multi-stage operations increases, by means of a second accelerator/mixer device (23b), the speed of the flow of water to be purified (F) received from said first accelerator/mixer device (23a), wherein in said first operation and second operation, there also being determined, by means of said at least two accelerator/mixer devices (23a, 23b), the formation of respective recirculation sub-flows (R1, R2) of said recirculation flow (R) at entry respectively to said first accelerator/mixer device (23a) and said second accelerator/mixer device (23b), wherein each accelerator/mixer device (23a, 23b) comprises a respective recirculation chamber (33) and a nozzle (32), of the Venturi type, disposed inside said recirculation chamber (33) and configured to generate said respective recirculation sub-flow (R1, R2) from the recirculation zone (30) to the recirculation chamber (33) and wherein the recirculation chamber (33) and the respective nozzle (32) of said first accelerator/mixer device (23a) have smaller sizes than respectively the recirculation chamber (33) and the respective nozzle (32) of said second accelerator/mixer device (23b).

## Patentansprüche

1. Apparat zur Reinigung von zu reinigendem Wasser (F), wobei der genannte Apparat umfasst:
- einen Tank (11) für das zu reinigende Wasser, der um eine Hauptentwicklungsachse (X) verläuft und einen Boden (21), der als Trichter ausgestaltet ist, um Sediment (22) zu empfangen, das von dem zu reinigenden Wasser (F) getrennt werden soll, und einen Einlass (13), der mit dem genannten Boden (21) verbunden ist, umfasst;
- mindestens ein Pumpmittel (14), außerhalb des genannten Tanks (11), und mit dem genannten Einlass (13) verbunden, wobei das genannte Pumpmittel (14) dazu fähig ist, einen Strom von zu reinigendem Wasser (F) unter Druck in den genannten Tank (11) zuzuführen;
- mindestens eine Leitung (24), die innerhalb des genannten Tanks (11) axial angeordnet ist und die nach oben von der genannten Hauptentwicklungsachse (X) abweicht, wobei die genannte Leitung (24) mit dem genannten Einlass (13) in Fluidverbindung steht, um Druckwasser zu empfangen, das von dem mindestens einen Pumpmittel (14) zugeführt wird;
- eine hydraulische Beschleuniger/Mischer-Anordnung (23), die in dem genannten Tank (11) angeordnet ist und den genannten Einlass (13) mit der genannten Leitung (24) verbindet, worin die genannte hydraulische Beschleuniger/Mischer-Anordnung (23) dazu eingerichtet ist, die Geschwindigkeit des Stroms des zu reinigenden Wassers (F) zu erhöhen, das in den Tank (11) zugeführt wird, und einen Rezirkulationsstrom (R) am Einlauf der genannten hydraulischen Beschleuniger/Mischer-Anordnung (23) zu bestimmen, wodurch eine Mischung des Stroms des zu reinigenden Wassers (F) mit mindestens einem Teil des Sedimentes (22) erzielt wird, das auf dem genannten Boden (21) vorhanden ist, und/oder mindestens einem Teil von Stoffen, die zu entfernen sind, die sich auf dem Boden (21) absetzen;
**dadurch gekennzeichnet, dass** die genannte hydraulische Beschleuniger/Mischer-Anordnung (23) der mehrstufigen Art ist und mindestens zwei Beschleuniger/Mischer-Vorrichtungen (23a, 23b) umfasst, die der Reihe nach verbunden entlang der genannten Hauptentwicklungsachse (X) angeordnet sind, welche eine erste Beschleuniger/Mischer-Vorrichtung (23a), die unmittelbar stromab des genannten Einlasses (13) verbunden angeordnet ist und dazu fähig ist, die Geschwindigkeit des Stroms des zu reinigenden Wassers (F) zu erhöhen, das in den Tank (11) zugeführt wird, und eine zweite Beschleuniger/Mischer-Vorrichtung (23b), die stromab der genannten ersten Beschleuniger/Mischer-Vorrichtung (23a) angeordnet ist und dazu fähig ist, die Geschwindigkeit des Stroms des zu reinigenden Wassers (F) zu erhöhen, das von der genannten ersten Beschleuniger/Mischer-Vorrichtung (23a) empfangen wird, umfassen, worin die genannten mindestens zwei Beschleuniger/Mischer-Vorrichtungen (23a, 23b) auch dazu eingerichtet sind, dazugehörige Rezirkulations-Unterströme (R1, R2) des genannten Rezirkulations-Stroms (R) am Einlauf jeweils der genannten ersten Beschleuniger/Mischer-Vorrichtung (23a) und der genannten zweiten Beschleuniger/Mischer-Vorrichtung (23b) zu bestimmen, und jede eine dazugehörige Rezirkulations-Kammer (33) und eine Düse (32), der Venturi-Art, umfasst, die innerhalb der genannten Rezirkulations-Kammer (33) angeordnet ist und dazu eingerichtet ist, den jeweiligen Rezirkulations-Unterstrom (R1, R2) von einer Rezirkulationszone (30) zur Rezirkulations-Kammer (33) zu erzeugen, und
worin die Rezirkulations-Kammer (33) und die jeweilige Düse (32) der genannten ersten Beschleuniger/Mischer-Vorrichtung (23a) geringere Größen haben als jeweils die Rezirkulations-Kammer (33) und die jeweilige Düse (32) der genannten zweiten Beschleuniger/Mischer-Vorrichtung (23b).

2. Apparat nach Anspruch 1, **dadurch gekennzeichnet, dass** er Trennmittel (26) umfasst, die die genannte Rezirkulationszone (30) um die genannte hydraulische Beschleuniger/Mischer-Anordnung (23) herum begrenzen, wobei die genannten Trennmittel (26) dazu eingerichtet sind, bevorzugte Kanäle für den Durchfluss des Rezirkulationsstroms (R) zur genannten hydraulischen Beschleuniger/Mischer-Anordnung (23) hin zu definieren.

3. Apparat nach Anspruch 2, **dadurch gekennzeichnet, dass** er eine Strömungsweiche (29) umfasst, die an den Außenwänden der Leitung (24), stromab der genannten hydraulischen Beschleuniger/Mischer-Anordnung (23), entlang der genannten Hauptentwicklungsachse (X) vorgesehen ist, worin die genannte Strömungsweiche (29) dazu eingerichtet ist, einen Strom von beschmutzenden Stoffen (M), die im zu reinigenden Wasser (F) vorhanden sind, durch Schwerkraft fallend von dem abweichenden Abschlussende der Leitung (24) zum Boden (21) hin außerhalb der Rezirkulationszone (30) zu lenken.

4. Apparat nach einem der vorhergehenden Ansprüche, **dadurch gekennzeichnet, dass** er einen Deflektor (18) umfasst, der innerhalb des Tanks (11) und über dem abweichenden Abschlussende der Leitung (24) entlang der Hauptentwicklungsachse (X) angeordnet ist, wobei der genannte Deflektor (18) dazu eingerichtet ist, zum Boden (21) hin einen Strom von beschmutzenden Stoffen (M), die im zu reinigenden Wasser (F) vorhanden sind, aus der genannten Leitung (24) abzuleiten.

5. Apparat nach einem der vorhergehenden Ansprüche, **dadurch gekennzeichnet, dass** er einen oberen Auslass (20) umfasst, der dem oberen Teil des Tanks (11) zugeordnet ist und für die Entfernung von ölartigen Stoffen (O), die im zu reinigenden Wasser (F) aufgelöst sind, am Auslauf aus der genannten Leitung (24) eingerichtet ist.

6. Apparat nach den Ansprüchen 4 und 5, **dadurch gekennzeichnet, dass** er eine ringförmige Leitung (25) umfasst, die konzentrisch und der genannten Leitung (24) außenliegend ist und sich vom oberen Teil des Tanks (11) zum Inneren hin des letztgenannten, entlang der genannten Hauptentwicklungsachse (X), erstreckt, um einen obligatorischen Pfad für das zu reinigende Wasser (F) zu definieren, wobei der genannte Deflektor (18) mittig innerhalb der genannten ringförmigen Leitung (25) positioniert ist, um einen Durchflussspalt zwischen dem Deflektor (18) selbst und den Wänden der ringförmigen Leitung (25) zu definieren, wobei der genannte Durchflussspalt für den Durchfluss von ölartigen Stoffen (O) zum mindestens einen oberen Auslass (20) hin eingerichtet ist, worin der genannte obere Auslass (20) dem oberen Teil des Tanks (11) zugeordnet ist und an der genannten ringförmigen Leitung (25) vorgesehen ist.

7. Apparat nach einem der vorhergehenden Ansprüche, **dadurch gekennzeichnet, dass** er mindestens einen Auslass (16) umfasst, der am oberen Teil des Tanks (11) angeordnet ist und dazu eingerichtet ist, das aufbereitete Wasser (W) in einer Richtung auszuleeren, die zur genannten Hauptentwicklungsachse (X) des Tanks (11) im Wesentlichen parallel ist.

8. Verfahren zur Reinigung von zu reinigendem Wasser (F), wobei das genannte Verfahren umfasst:
- Einführen unter Druck eines Stroms von zu reinigendem Wasser (F) in einen Tank (11), der um eine Hauptentwicklungsachse (X) verläuft, um das Bilden von Sediment (22) zu bestimmen, das von dem Wasser getrennt werden soll, das sich auf einem Boden (21) absetzt, der als Trichter ausgestaltet ist, worin das genannte zu reinigende Wasser (F) von einem Einlass (13) eingeführt wird, der mit dem Boden (21) verbunden ist und durch einen obligatorischen Pfad gefördert wird, der von mindestens einer Leitung (24) gebildet ist, die axial innerhalb des genannten Tanks (11) angeordnet ist und nach oben von der genannten Hauptentwicklungsachse (X) abweicht,
- Erhöhen der Geschwindigkeit des Stroms des zu reinigenden Wassers (F), das in den Tank (11) zugeführt wird, mittels einer hydraulischen Beschleuniger/Mischer-Anordnung (23), die am Einlauf der genannten Leitung (24) verbunden ist, und Rezirkulieren von zu reinigenden Wasser (F) am Einlauf der genannten hydraulischen Beschleuniger/Mischer-Anordnung (23), wodurch eine Mischung des Stroms des zu reinigenden Wassers (F) mit mindestens einem Teil des Sedimentes (22) erzielt wird, das auf dem genannten Boden (21) vorhanden ist, und/oder mindestens einem Teil von Stoffen, die zu entfernen sind, die sich auf dem Boden (21) absetzen,
**dadurch gekennzeichnet, dass** die genannte Erhöhung der Geschwindigkeit des Stroms des zu reinigenden Wassers (F) und die genannte Rezirkulation des zu reinigenden Wassers (F) mittels sequentieller mehrstufiger Vorgänge von Geschwindigkeitserhöhung und Rezirkulation durch mindestens zwei Beschleuniger/Mischer-Vorrichtungen (23a, 23b) durchgeführt werden, die der Reihe nach verbunden entlang der genannten Hauptentwicklungsachse (X) angeordnet sind, worin ein erster Vorgang der genannten sequentiellen mehrstufigen Vorgänge die Geschwindigkeit des Stroms des zu reinigenden Wassers (F), das in den Tank (11) zugeführt wird, durch eine erste Beschleuniger/Mischer-Vorrichtung (23a) erhöht, und ein zweiter Vorgang der genannten sequentiellen mehrstufigen Vorgänge, durch eine zweite Beschleuniger/Mischer-Vorrichtung (23b), die Geschwindigkeit des Stroms des zu reinigenden Wassers (F) erhöht, das von der genannten ersten Beschleuniger/Mischer-Vorrichtung (23a) empfangen wird, worin es in dem genannten ersten und dem genannten zweiten Vorgang, mittels der genannten mindestens zwei Beschleuniger/Mischer-Vorrichtungen (23a, 23b), auch das Bilden von dazugehörigen Rezirkulations-Unterströmen (R1, R2) des genannten Rezirkulations-Stroms (R) am Einlauf jeweils der genannten ersten Beschleuniger/Mischer-Vorrichtung (23a) und der genannten zweiten Beschleuniger/Mischer-Vorrichtung (23b) bestimmt wird, worin jede Beschleuniger/Mischer-Vorrichtung (23a, 23b) eine dazugehörige Rezirkulations-Kammer (33) und eine Düse (32), der Venturi-Art, umfasst, die innerhalb der genannten Rezirkulations-Kammer (33) angeordnet ist und dazu eingerichtet ist, den jeweiligen Rezirkulations-Unterstrom (R1, R2) von der Rezirkulationszone (30) zur Rezirkulations-Kammer (33) zu erzeugen, und worin die Rezirkulations-Kammer (33) und die jeweilige Düse (32) der genannten ersten Beschleuniger/Mischer-Vorrichtung (23a) geringere Größen haben als jeweils die Rezirkulations-Kammer (33) und die jeweilige Düse (32) der genannten zweiten Beschleuniger/Mischer-Vorrichtung (23b).

## Revendications

1. Appareil destiné à épurer de l'eau à épurer (F), ledit appareil comportant :
- un réservoir (11) pour l'eau à épurer, qui se développe autour d'un axe de développement principal (X) et qui comporte un fond (21), conformé comme une trémie, pour recevoir du sédiment (22) séparé de l'eau à épurer (F), et une entrée (13) raccordée audit fond (21),
- au moins un moyen de pompage (14), à l'extérieur dudit réservoir (11), et raccordé à ladite entrée (13), le moyen de pompage (14) pouvant transférer, sous pression, un écoulement d'eau à épurer (F) dans ledit réservoir (11),
- au moins un conduit (24) disposé axialement à l'intérieur dudit réservoir (11) et divergeant vers le haut par rapport audit axe de développement principal (X), ledit conduit (24) étant fluidiquement relié à ladite entrée (13) pour recevoir l'eau mise sous pression transférée par ledit au moins un moyen de pompage (14),
- un ensemble accélérateur/mélangeur hydraulique (23) disposé dans ledit réservoir (11) et qui relie ladite entrée (13) audit conduit (24), dans lequel ledit ensemble accélérateur/mélangeur hydraulique (23) est configuré pour augmenter la vitesse de l'écoulement d'eau à épurer (F) introduite dans le réservoir (11) et déterminer un écoulement de recirculation (R) à l'entrée dudit ensemble accélérateur/mélangeur hydraulique (23) en obtenant un mélange de l'écoulement d'eau à épurer (F) avec au moins une partie du sédiment (22) présent en correspondance avec ledit fond (21) et/ou au moins une partie de substances à éliminer étant déposées sur le fond (21),
**caractérisé en ce que** ledit ensemble accélérateur/mélangeur hydraulique (23) est du type à étages multiples et comporte au moins deux dispositifs accélérateurs/mélangeurs (23a, 23b) disposés raccordés l'un à la suite de l'autre le long dudit axe de développement principal (X), qui comportent un premier dispositif accélérateur/mélangeur (23a) disposé directement raccordé en aval de ladite entrée (13) et pouvant augmenter la vitesse de l'écoulement d'eau à épurer (F) introduite dans le réservoir (11) et un second dispositif accélérateur/mélangeur (23b) disposé en aval dudit premier dispositif accélérateur/mélangeur (23a) et pouvant augmenter la vitesse de l'écoulement de l'eau à épurer (F) reçue dudit premier dispositif accélérateur/mélangeur (23a), dans lequel lesdits au moins deux dispositifs accélérateurs/mélangeurs (23a, 23b) sont également configurés pour déterminer des sous-écoulement de recirculation (R1, R2) respectifs dudit écoulement de recirculation (R) à l'entrée respectivement dudit premier dispositif accélérateur/mélangeur (23a) et dudit second dispositif accélérateur/mélangeur (23b) et chacun comporte une chambre de recirculation (33) respective et une buse (32), du type à venturi, disposée à l'intérieur de ladite chambre de recirculation (33) et configurée pour générer ledit sous-écoulement de recirculation (R1, R2) respectif à partir d'une zone de recirculation (30) jusqu'à la chambre de recirculation (33), et
dans lequel la chambre de recirculation (33) et la buse (32) respective dudit premier dispositif accélérateur/mélangeur (23a) ont des tailles respectivement plus petites que la chambre de recirculation (33) et la buse (32) respective dudit second dispositif accélérateur/mélangeur (23b).

2. Appareil selon la revendication 1, **caractérisé en ce qu'**il comporte des moyens séparateurs (26) qui délimitent ladite zone de recirculation (30) autour dudit ensemble accélérateur/mélangeur hydraulique (23), lesdits moyens séparateurs (26) étant configurés pour définir des canaux préférentiels pour le passage de l'écoulement de recirculation (R) vers ledit ensemble accélérateur/mélangeur hydraulique (23).

3. Appareil selon la revendication 2, **caractérisé en ce qu'**il comporte un déflecteur d'écoulement (29) agencé sur les parois externes du conduit (24), en aval dudit ensemble accélérateur/mélangeur hydraulique (23), le long dudit axe de développement principal (X), dans lequel ledit déflecteur d'écoulement (29) est configuré pour diriger un écoulement de substances polluantes (M) présentes dans l'eau à épurer (F), tombant par gravité de l'extrémité terminale divergente du conduit (24) vers le fond (21) à l'extérieur de la zone de circulation (30).

4. Appareil selon l'une quelconque des revendications ci-dessus, **caractérisé en ce qu'**il comporte un déflecteur (18) disposé à l'intérieur du réservoir (11) et au-dessus de l'extrémité terminale divergente du conduit (24) le long de l'axe de développement principal (X), ledit déflecteur (18) étant configuré pour dévier vers le fond (21) un écoulement de substances polluantes (M) présentes dans l'eau à épurer (F) provenant dudit conduit (24).

5. Appareil selon l'une quelconque des revendications ci-dessus, **caractérisé en ce qu'**il comporte une sortie supérieure (20) associée au-dessus du réservoir (11) et configurée pour l'élimination de substances huileuses (O) dissoutes dans l'eau à épurer (F) à la sortie dudit conduit (24).

6. Appareil selon les revendications 4 et 5, **caractérisé en ce qu'**il comporte un conduit annulaire (25) concentrique et externe audit conduit (24) et qui s'étend depuis le dessus du réservoir (11) vers l'intérieur de ce dernier, le long dudit axe de développement principal (X), de manière à définir un trajet obligatoire pour l'eau à épurer (F), ledit déflecteur (18) étant positionné centralement à l'intérieur dudit conduit annulaire (25) de manière à définir un espace de passage entre le déflecteur (18) lui-même et les parois du conduit annulaire (25), ledit espace de passage étant configuré pour le passage de substances huileuses (O) vers ladite au moins une sortie supérieure (20), dans lequel ladite sortie supérieure (20) est associée au-dessus du réservoir (11) et est agencée en correspondance avec ledit conduit annulaire (25).

7. Appareil selon l'une quelconque des revendications ci-dessus, **caractérisé en ce qu'**il comporte au moins une sortie (16) disposée sur le dessus du réservoir (11) et configurée pour évacuer l'eau traitée (W) dans une direction sensiblement parallèle audit axe de développement principal (X) du réservoir (11).

8. Procédé destiné à épurer de l'eau à épurer (F), ledit procédé comportant de :
- introduire sous pression un écoulement d'eau à épurer (F) dans un réservoir (11) qui se développe autour d'un axe de développement principal (X), pour déterminer la formation de sédiment (22) séparé de l'eau qui se dépose sur un fond (21) conformé comme une trémie, dans lequel ladite eau à épurer est introduite depuis une entrée (13) raccordée au fond (21) et transférée par un trajet obligatoire formé par au moins un conduit (24) disposé axialement à l'intérieur dudit réservoir (11) et divergeant vers le haut par rapport audit axe de développement principal (X),
- augmenter la vitesse de l'écoulement d'eau à épurer (F) introduite dans le réservoir (11) au moyen d'un ensemble accélérateur/mélangeur hydraulique (23) relié à l'entrée dudit conduit (24) et remettre en circulation l'eau à épurer (F) à l'entrée dudit ensemble accélérateur/mélangeur hydraulique (23) en obtenant un mélange de l'écoulement d'eau à épurer (F) avec au moins une partie du sédiment (22) présent en correspondance avec ledit fond (21) et/ou au moins une partie de substances à éliminer qui se déposent sur le fond (21), **caractérisé en ce que** ladite augmentation de vitesse de l'écoulement d'eau à épurer (F) et ladite recirculation d'eau à épurer (F) sont réalisées au moyen d'opérations séquentielles à étapes multiples d'augmentation de vitesse et de recirculation au moyen d'au moins deux dispositifs accélérateurs/mélangeurs (23a, 23b) disposés raccordés l'un à la suite de l'autre le long dudit axe de développement principal (X), dans lequel une première opération parmi lesdites opérations séquentielles à étapes multiples augmente la vitesse de l'écoulement d'eau à épurer (F) introduite dans le réservoir (11) au moyen d'un premier dispositif accélérateur/mélangeur (23a), et une seconde opération parmi lesdites opérations séquentielles à étapes multiples augmente, au moyen d'un second dispositif accélérateur/mélangeur (23b), la vitesse de l'écoulement d'eau à épurer (F) reçue dudit premier dispositif accélérateur/mélangeur (23a), dans lequel pendant ladite première opération et ladite seconde opération, la formation de sous-écoulements de recirculation (R1, R2) respectifs dudit écoulement de recirculation (R) à l'entrée respectivement dudit premier dispositif accélérateur/mélangeur (23a) et dudit second dispositif accélérateur/mélangeur (23b) est également déterminée au moyen desdits au moins deux dispositifs accélérateurs/mélangeurs (23a, 23b), dans lequel chaque dispositif accélérateur/mélangeur (23a, 23b) comporte une chambre de recirculation (33) respective et une buse (32), du type à venturi, disposée à l'intérieur de ladite chambre de recirculation (33) et configurée pour générer ledit sous-écoulement de recirculation (R1, R2) respectif à partir de la zone de recirculation (30) jusqu'à la chambre de recirculation (33) et dans lequel la chambre de recirculation (33) et la buse (32) respective dudit premier dispositif accélérateur/mélangeur (23a) ont des tailles respectivement plus petites que la chambre de recirculation (33) et la buse (32) respective dudit second dispositif accélérateur/mélangeur (23b).
